(19) Europäisches Patentamt

European Patent Office

Office européen des brevets

(11) EP 0 781 056 A1

(12) **DEMANDE DE BREVET EUROPEEN**

(43) Date de publication:
25.06.1997 Bulletin 1997/26

(51) Int Cl.⁶: **H04N 9/64**

(21) Numéro de dépôt: 96402781.7

(22) Date de dépôt: 18.12.1996

(84) Etats contractants désignés:
DE FR GB

(30) Priorité: 21.12.1995 FR 9515294

(71) Demandeur: THOMSON BROADCAST SYSTEMS
95801 Cergy Pontoise Cedex (FR)

(72) Inventeur: Delmas, Francis
92050 Paris La Defense (FR)

(74) Mandataire: Ruellan-Lemonnier, Brigitte
THOMSON multimedia,
46 quai A. Le Gallo
92648 Boulogne Cédex (FR)

(54) **Dispositif de traitement d'images et caméra de ralenti électronique**

(57)     L'invention concerne un dispositif de traitement des informations de couleur (R, V, B) d'un signal représentant une image.

Le dispositif de traitement comprend des moyens constitués, pour chaque information de couleur, d'un convertisseur analogique/numérique (12, 13, 14) et d'une mémoire tampon (MT1, MT2, MT3), un circuit (PT) de traitement des informations numériques issues de chaque mémoire tampon, et des circuits sérialiseurs (SE1, SE2, SE3) recueillant les signaux issus du circuit (PT) de traitement et permettant de générer des signaux (D1, D2, D3) destinés à restituer l'image avec un effet de ralenti.

Selon un perfectionnement de l'invention, l'unité de contrôle comprend des moyens (M0, SE4) pour générer un signal (I) permettant de restituer l'image à vitesse normale. L'invention s'applique particulièrement aux caméras de studio de télévision du domaine professionnel.

FIG.3

EP 0 781 056 A1

**Description**

L'invention concerne une caméra de ralenti électronique.

L'invention s'applique plus particulièrement aux caméras de studio de télévision.

De telles caméras sont constituées d'un dispositif permettant de transformer les informations lumineuses en informations électriques de couleur (R, V, B) et d'un dispositif de traitement de ces informations de couleur (R, V, B).

Selon un premier mode de réalisation de ces caméras, le dispositif permettant de transformer les informations lumineuses en informations de couleur (R, V, B) est situé dans une tête de caméra, alors que le dispositif de traitement est situé dans une unité de contrôle plus ou moins éloignée de la tête de caméra et reliée à la tête de caméra par un câble.

Selon un autre mode de réalisation, le dispositif permettant de transformer les informations lumineuses en informations de couleur (R, V, B) et le dispositif de traitement sont situés dans une seule et même entité constituant la caméra elle-même.

Deux types de solutions sont connus de l'homme de l'art afin de réaliser des ralentis.

Une première solution consiste à utiliser une caméra dont l'unité de contrôle travaille à la fréquence trame standard, soit 50 Hz ou 60 Hz selon le pays, et à envoyer le signal issu de la caméra dans un magnétoscope muni d'une fonction de ralenti.

Une deuxième solution consiste à utiliser une caméra dont l'unité de contrôle travaille à une fréquence trame dont la valeur est égale à un multiple entier de la fréquence standard, par exemple 150 Hz ou 180 Hz, et à envoyer le signal issu de la caméra dans un magnétoscope adapté pour enregistrer à la fréquence de travail de l'unité de contrôle et pour lire à la fréquence standard, soit respectivement 50 Hz ou 60 Hz.

Les solutions décrites ci-dessus présentent de nombreux inconvénients. Les systèmes mis en oeuvre pour obtenir un ralenti sont lourds et encombrants du fait du volume important des magnétoscopes. Cet inconvénient est encore plus désavantageux lorsque l'unité de contrôle et le magnétoscope doivent être placés dans un véhicule, par exemple un car de reportage, afin de réaliser une régie mobile.

D'autre part, si on désire disposer non seulement des images représentant la scène au ralenti, mais aussi d'images représentant la scène en temps réel, il est alors indispensable d'utiliser une deuxième caméra. Ceci représente un autre inconvénient.

L'invention ne présente pas ces inconvénients.

L'invention propose un dispositif de traitement des informations de couleur (R, V, B) d'un signal représentant une image. Le dispositif de traitement comprend des moyens constitués, pour chaque information de couleur, d'un convertisseur analogique/numérique et d'une mémoire tampon associée audit convertisseur analogique/numérique, la sortie de chaque convertisseur analogique/numérique étant reliée à l'entrée de la mémoire tampon qui lui est associée, un circuit de traitement permettant de traiter les informations numériques issues de chaque mémoire tampon, ledit circuit de traitement comprenant des circuits de conversion permettant de convertir les informations de couleur (R, V, B) en informations de luminance et de chrominance (Y, CR, CB), et des circuits sérialiseurs recueillant les signaux issus du circuit de traitement et permettant de générer des signaux destinés à restituer l'image avec un effet de ralenti.

Chaque convertisseur analogique/numérique permet d'échantillonner le signal qu'il reçoit à une fréquence Fe égale à N fois la fréquence d'échantillonnage standard du signal de luminance. Il vient donc : $Fe = N \times 13,5$ MHz. Chaque mémoire tampon permet d'écrire les échantillons qu'il reçoit à la fréquence Fe et de lire ces mêmes échantillons à la fréquence d'échantillonnage standard du signal de luminance.

De même, l'invention propose un dispositif de traitement des informations de couleur (R, V, B) tel que celui mentionné ci-dessus et comprenant des moyens supplémentaires pour générer un signal permettant de restituer l'image en temps réel, c'est-à-dire à vitesse normale.

Un avantage de l'invention est alors de réaliser une caméra unique permettant de délivrer simultanément des images à vitesse normale d'une scène donnée ainsi que des informations permettant de générer des images au ralenti de cette même scène.

Dans le cas où la caméra est constituée d'une tête de caméra et d'une unité de contrôle, le dispositif de traitement selon l'invention peut être localisé soit dans la tête de caméra, soit dans l'unité de contrôle.

Dans le cas où la caméra est une entité d'un seul bloc, le dispositif de traitement selon l'invention fait partie du dispositif de traitement de cette entité.

Ainsi, de façon générale, l'invention propose-t-elle une caméra comprenant un dispositif permettant de transformer les informations lumineuses en informations de couleur (R, V, B) et un dispositif de traitement des informations de couleur (R, V, B), caractérisé en ce que le dispositif de traitement des informations de couleur (R, V, B) comprend des moyens constitués, pour chaque information de couleur, d'un convertisseur analogique/numérique et d'une mémoire tampon associée audit convertisseur analogique/numérique, la sortie de chaque convertisseur analogique/numérique étant reliée à l'entrée de la mémoire tampon qui lui est associée, un circuit de traitement permettant de traiter les informations numériques issues de chaque mémoire tampon, ledit circuit de traitement comprenant des circuits de conversion permettant de convertir les informations de couleur (R, V, B) en informations de luminance et de chrominance (Y, CR, CB), et des circuits sérialiseurs recueillant les signaux issus du circuit de traitement et permettant de générer des signaux destinés à restituer l'image avec un effet de ralenti.

Comme cela a été mentionné précédemment, chaque convertisseur analogique/numérique permet d'échantillonner le signal qu'il reçoit à une fréquence Fe égale à N fois la fréquence d'échantillonnage standard du signal de luminance. Il vient donc : Fe = N X 13,5 MHz. Chaque mémoire tampon permet d'écrire les échantillons qu'elle reçoit à la fréquence Fe et de lire ces mêmes échantillons à la fréquence d'échantillonnage standard du signal de luminance.

L'invention propose également un nouveau système léger et peu encombrant permettant de fournir simultanément une image au ralenti ainsi qu'une image à vitesse normale de la même scène en utilisant une seule caméra telle que celle mentionnée ci-dessus.

D'autres caractéristiques et avantages de l'invention apparaîtront à la lecture d'un mode de réalisation préférentiel pris à titre d'exemple non limitatif et fait avec référence aux figures ci-annexées, parmi lesquelles :

- les figures 1a et 1b représentent les deux modes de réalisation permettant de réaliser un ralenti selon l'art antérieur ;
- la figure 2 représente le schéma de principe du mode de réalisation permettant l'obtention d'un ralenti selon l'invention ;
- la figure 3 représente un perfectionnement du dispositif représenté en figure 2 ;
- la figure 4 représente une vue de détail d'un premier circuit représenté en figures 2 et 3 ;
- la figure 5 représente une vue de détail d'un deuxième circuit représenté en figures 2 et 3 ;
- la figure 6 représente une application utilisant une caméra de ralenti selon l'invention.

Sur toutes les figures, les mêmes repères désignent les mêmes éléments.

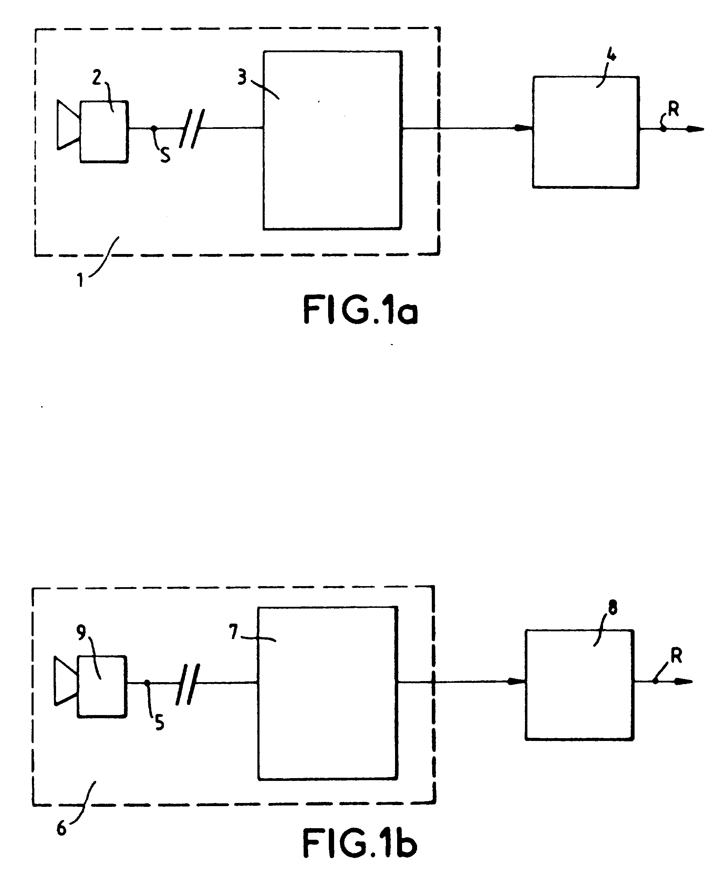

Les figures 1a et 1b représentent les deux modes de réalisation permettant de réaliser un ralenti selon l'art antérieur.

Le dispositif de la figure 1a est composé d'une caméra 1 et d'un magnétoscope 4. La caméra 1 est elle-même composée d'une tête 2 de caméra, d'une unité de contrôle 3 et d'un câble 5 reliant la tête de caméra à l'unité de contrôle. Le ralenti R est issu du magnétoscope 4.

Selon ce premier mode de réalisation de l'art antérieur, la tête de caméra et l'unité de contrôle travaillent à la fréquence trame standard, soit 50 Hz ou 60Hz. Le magnétoscope 4 est aussi un magnétoscope standard dont la particularité est d'avoir une fonction de ralenti.

Le dispositif de la figure 16 est composé d'une caméra 6 et d'un magnétoscope 8. La caméra 6 est constituée d'une tête de caméra 9 et d'une unité de contrôle 7 reliées entre elles par un câble 5. La caméra 6 est composée d'une tête 9 permettant d'analyser les images de façon à constituer des trames dont la fréquence est égale à un multiple entier de la fréquence standard de 50 Hz ou 60 Hz, soit, par exemple, 150 Hz ou 180 Hz. L'unité de contrôle 7 travaille alors à la fréquence de 150 Hz ou 180 Hz.

Le magnétoscope 8 est adapté pour enregistrer à la fréquence de travail de l'unité de contrôle 7 et pour lire à la fréquence standard de façon à restituer le ralenti R.

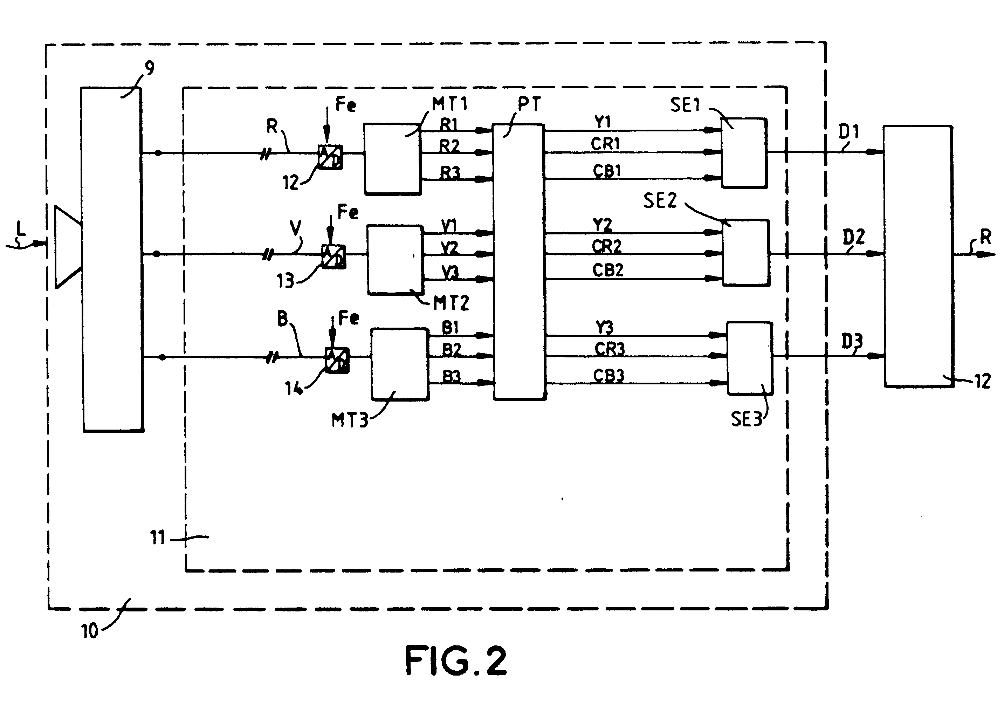

La figure 2 représente le schéma de principe du mode de réalisation permettant l'obtention d'un ralenti selon l'invention.

La caméra 10 est constituée d'un dispositif 9 permettant de transformer les informations lumineuses L en informations de couleur (R, V, B). Le dispositif 9 comprend des moyens permettant d'analyser les images de façon à constituer des trames haute fréquence, c'est-à-dire des trames dont la fréquence est égale à un multiple entier N de la fréquence standard de 50 Hz ou 60 Hz.

Pour le mode de réalisation décrit en figure 2, l'entier N est égal à 3. L'invention concerne cependant d'autres valeurs entières de N telles que, par exemple, N = 2.

Chaque information de couleur (R, V, B) est reliée à l'entrée d'un convertisseur analogique / numérique (12, 13, 14) de fréquence d'échantillonnage Fe. Dans le cadre de la norme au standard 601, la fréquence de lecture des échantillons issus des mémoires tampon est égale à 13,5 MHz et la fréquence d'échantillonnage Fe est égale à N X 13,5 MHz. Dans le cas où, par exemple, N = 3, il vient donc Fe = 40,5 MHz.

Chaque information de couleur (R, V, B) subit une suite de traitements identiques représentés en figure 2 par la succession des circuits que sont : les convertisseurs analogiques/numériques (12, 13, 14) mentionnés précédemment, des mémoires tampon (MT1, MT2, MT3), un circuit de traitement (PT) de l'information issue des mémoires tampon et des sérialiseurs (SE1, SE2, SE3) permettant de mettre en série, pour chaque couleur, les informations issues du circuit de traitement.

Le signal issu de chaque convertisseur analogique/numérique est une succession d'échantillons codés sur b bits et espacés dans le temps de 25 ns. Selon le mode de réalisation préférentiel de l'invention, le nombre b est égal à 12. L'invention concerne cependant d'autres types de codage tels que, par exemple, le codage sur 10 bits.

Selon le mode de réalisation préférentiel de l'invention, chaque mémoire tampon qui reçoit le signal R, V ou B issu d'un convertisseur analogique/numérique est constituée de deux sous-ensembles de N circuits de type FIFO. Un premier sous-ensemble reçoit les échantillons d'ordre pair et un deuxième sous-ensemble reçoit les échantillons d'ordre impair.

Dans l'exemple choisi où N = 3, les premier, deuxième et troisième circuits du premier sous-ensemble mémorisent à la fréquence de 20,25 MHz les échantillons pairs des trames de rangs successifs 1, 4, 7, etc pour le premier circuit, des trames de rangs successifs 2, 5, 8, etc pour le deuxième circuit, et des trames de rangs successifs 3, 6, 9, etc pour le troisième circuit.

De même, les premier, deuxième et troisième circuits du deuxième sous-ensemble mémorisent à la fréquence de 20,25 MHz les échantillons impairs des trames de rangs successifs 1, 4, 7, etc pour le premier circuit, des trames de rangs successifs 2, 5, 8, etc pour le deuxième circuit, et des trames de rangs successifs 3, 6, 9, etc pour le troisième circuit.

Dans le cas général, le ième circuit de chaque sous-ensemble reçoit les échantillons respectivement d'ordre pair ou impair des trames de rangs successifs i, i + N, i + 2N, etc. Selon le mode de réalisation préférentiel, l'écriture des informations dans les mémoires FIFO s'effectue à la fréquence d'échantillonnage Fe et la lecture à la fréquence standard de 13,5 MHz.

Dans le cas où N = 3, le signal issu des mémoires tampon MT1, MT2 et MT3 est composé respectivement d'un ensemble de signaux de couleur rouge R1, R2 et R3, d'un ensemble de signaux de couleur verte V1, V2 et V3, et d'un ensemble de signaux de couleur bleue B1, B2, B3.

Avantageusement, du fait de la lecture à la fréquence standard de 13,5 MHz, chacun des ensembles de signaux Ri, Vi et Bi (i = 1, 2, 3) correspond à la fréquence de trame standard de 50 Hz ou de 60 Hz.

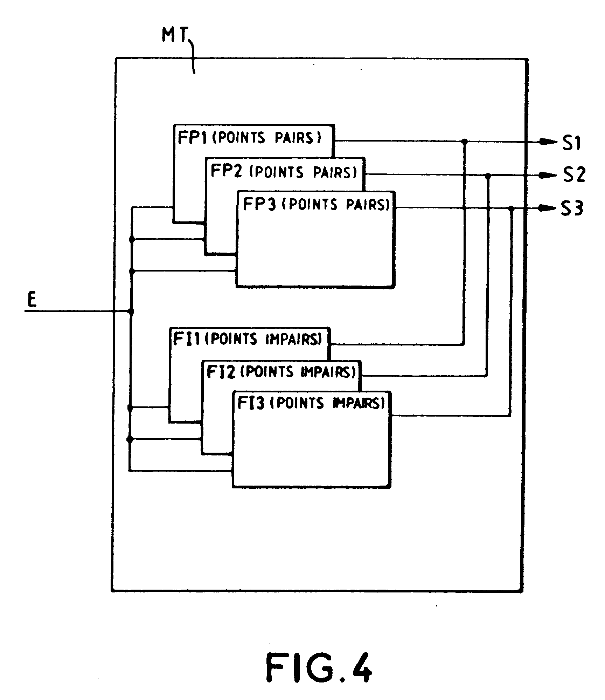

Pour des raisons de clarté, la représentation du contenu des mémoires tampon n'apparaît pas en figure 2. Cette représentation est donnée en figure 4.

Les signaux Ri, Vi, Bi (i = 1, 2, 3) sont envoyés dans un opérateur de traitement PT de façon que les opérations usuelles telles que, par exemple, la compression des blancs pour redonner du contraste quand on est proche de la saturation (communément appelée "knee"), ou encore l'uniformisation des niveaux de noir et des niveaux de blanc des différentes couleurs rouge, verte et bleue (communément appelée "shading"), soient exécutées. De façon plus générale, l'opérateur de traitement PT est un circuit permettant de réaliser toute opération de traitement s'avérant utile sur les informations de couleur Ri, Vi, Bi (i = 1, 2, 3).

Avantageusement, l'opérateur de traitement PT permet aussi la conversion des informations de couleur R, V et B en informations de luminance et de chrominance Y, CB, CR.

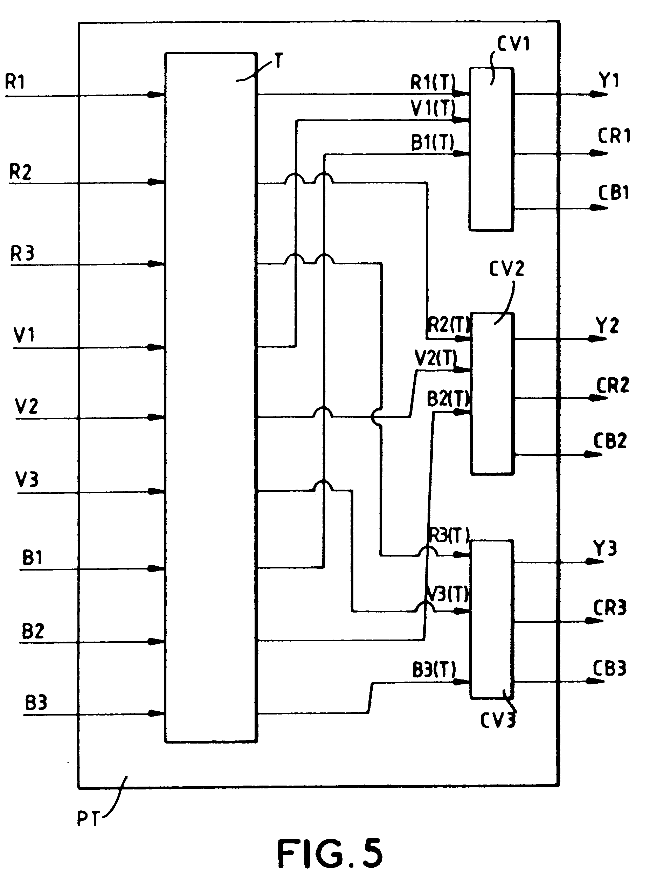

Pour des raisons de clarté, l'architecture du circuit de traitement PT selon l'invention n'apparaît pas en figure 2. Cette architecture est décrite en figure 5. Les signaux issus de l'opérateur PT sont les trois composantes de luminance Y1, Y2, Y3, les trois composantes chrominance de différence de couleur rouge CR1, CR2, CR3 et les trois composantes chrominance de différence de couleur bleue CB1, CB2, CB3. Les trois composantes Y1, CR1, CB1 sont envoyées dans un sérialiseur SE1 de façon à générer le train de données série usuel CB1(1), Y1(1), CR1(1), Y1(2), CB1(3), Y1 (3), CR1(3), Y1(4), CB1(5), Y1(5), CR1(5), etc, où l'indice (n) des différentes composantes CBi, Yi, CRi représente le rang d'un paquet de bits. Il en est de même pour les trois composantes Y2, CR2, CB2, envoyées dans le sérialiseur SE2 ainsi que pour les trois composantes Y3, CR3, CB3, envoyées dans le sérialiseur SE3. Les trains de données D1, D2, D3 issus des sérialiseurs respectifs SE1, SE2, SE3 sont alors envoyés dans un dispositif 12 de génération de ralenti R. De tels dispositifs de génération de ralentis sont connus en eux-mêmes. Il peut s'agir, par exemple, d'un dispositif tel que le SUPER LSM développé par la société EVB BROADCAST EQUIPMENT.

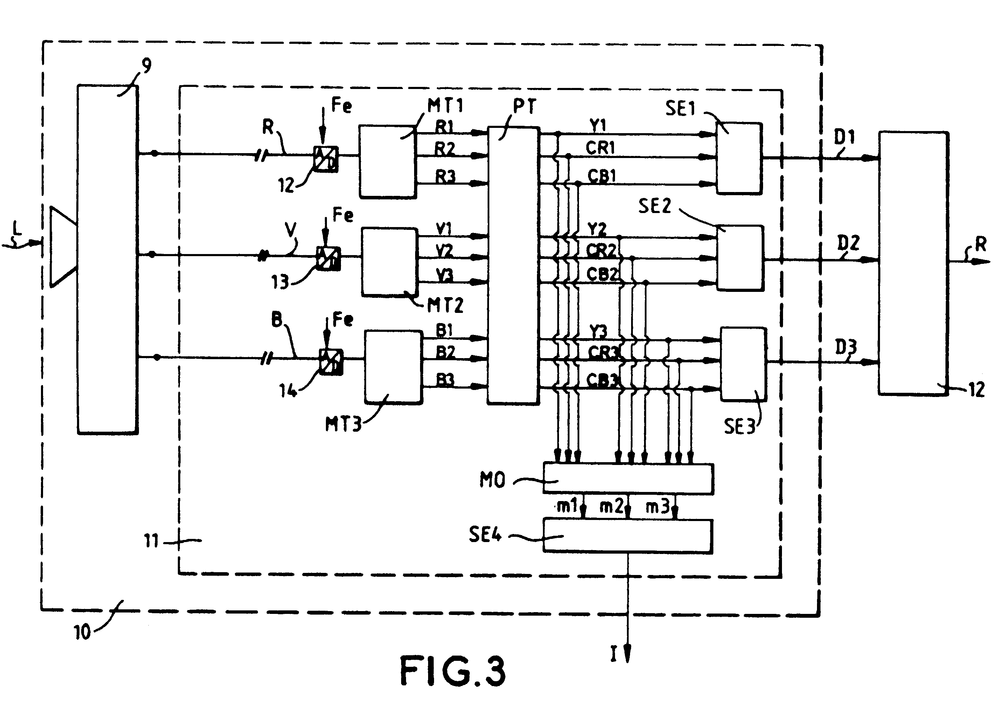

La figure 3 représente un perfectionnement du dispositif représenté en figure 2.

Selon ce perfectionnement de l'invention, les informations permettant de générer l'image au ralenti R permettent aussi de générer l'image à vitesse normale.

En effet, les données de luminance et de chrominance Yi, CRi, CBi (i = 1, 2, 3) sont alors appliquées à un circuit MO ayant pour fonction de faire la moyenne des différentes composantes. Selon le mode de réalisation préférentiel, le signal issu du circuit MO est composé de trois signaux distincts :

un signal de luminance m1 tel que :

$$m1 = \frac{Y1\,(t1) + Y2\,(t2) + Y3}{3}\ ,$$

un signal de chrominance de différence de couleur rouge m2 tel que :

$$m2 = \frac{CR1\,(t1) + CR2\,(t2) + CR3}{3}\ ,$$

un signal de chrominance de différence de couleur bleue m3 tel que :

$$m3 = \frac{CB1\,(t1) + CB2\,(t2) + CB3}{3} \; ,$$

où Y1 (t1), CR1 (t1) et CB1 (t1) représentent respectivement les composantes de luminance, de différence de couleur rouge et de différence de couleur bleue Y1, CR1 et CB1 retardées de la durée t1 correspondant au défilement de deux trames haute fréquence successives et où Y2(t2), CR2(t2) et CB2(t2) représentent respectivement les composantes de luminance, de différence de couleur rouge et de différence de couleur bleue Y2, CR2 et CB2 retardées de la durée t2 correspondant au défilement d'une trame haute fréquence. Comme cela a été mentionné précédemment, par trame haute fréquence, il faut entendre une trame dont la fréquence est égale à un multiple entier N de la fréquence standard de 50 Hz ou de 60 Hz. Ainsi, les signaux Y1 et Y2 sont-ils temporellement décalés sur le signal Y3, les signaux CR1 et CR2 sur le signal CR3 et les signaux CB1 et CB2 sur le signal CB3. Le circuit MO comprend des circuits de retard permettant d'effectuer ces décalages temporels.

Il s'ensuit que les signaux m1, m2 et m3 constituant la première trame à fréquence standard, soit 50 Hz ou 60 Hz, sont respectivement issus du signal de luminance, du signal de différence de couleur rouge et du signal de différence de couleur bleue de deux trames successives haute fréquence de rang impair et de la trame haute fréquence de rang pair située entre les deux trames successives de rang impair.

De même, les signaux m1, m2 et m3 constituant la deuxième trame à fréquence standard sont respectivement issus du signal de luminance, du signal de différence de couleur rouge et du signal de différence de couleur bleue de deux trames haute fréquence de rang pair successif et de la trame haute fréquence de rang impair située entre les deux trames successives de rang pair.

Avantageusement, cet effet de moyenne entre trame paire et impaire permet une amélioration du rendu de l'image à vitesse normale.

Selon un mode de réalisation particulier du perfectionnement de l'invention, il est possible de pondérer l'influence des différentes valeurs de chaque composante Yi, CBi, CRi à l'aide de coefficients $\alpha i$, $\beta i$, $\gamma i$ lors du calcul des moyennes m1, m2, m3.

Il vient alors :

$$m1 = \frac{\alpha 1 x Y1\,(t1) + \alpha 2 x Y2\,(t2) + \alpha 3 x Y3}{3} \; ,$$

$$m2 = \frac{\beta 1 x CR1\,(t1) + \beta 2 x CR2\,(t2) + \beta 3 x CR\,3}{3} \; ,$$

$$m3 = \frac{\gamma 1 x CB1\,(t1) + \gamma 2 x CB2\,(t2) + \gamma 3 x CB\,3}{3} \; .$$

Les coefficients $\alpha i$, $\beta i$, $\gamma i$ peuvent être identiques ou différents selon la loi de pondération que l'on désire établir.

La figure 4 représente une vue de détail d'un premier circuit représenté en figures 2 et 3. Ce premier circuit est un circuit de mémoire tampon MT tel que ceux référencés MT1, MT2 ou MT3. Le signal d'entrée E représente donc de façon générique les signaux de couleur R, V, B numérisés, alors que les signaux de sortie S1, S2, S3 représentent respectivement soit les signaux R1, R2, R3 dans le cas où E = R, soit les signaux V1, V2, V3 dans le cas où E = V, soit les signaux B1, B2, B3 dans le cas où E = B.

Comme cela a été mentionné précédemment, le signal d'entrée E est constitué d'une succession d'échantillons codés sur b bits. Selon l'exemple de réalisation choisi, chaque mémoire tampon est constituée de deux sous-ensembles de trois circuits de type FIFO. Le premier sous-ensemble est constitué des circuits FP1, FP2, FP3 qui recueillent les échantillons d'ordre pair et le deuxième sous-ensemble est constitué des circuits FI1, FI2, FI3 qui recueillent les échantillons d'ordre impair.

Selon le mode de réalisation préférentiel choisi, la présence de deux sous-ensembles de circuits de type FIFO nécessite le multiplexage de la fréquence d'entrée des échantillons. Il s'ensuit que chaque circuit de type FIFO (FP1, FP2, FP3, FI1, FI2, FI3) recueille les échantillons à la fréquence de 20,25 MHz. Avantageusement, la lecture séquentielle des informations évite l'utilisation de compteur d'adressage en écriture et en lecture.

Selon un autre mode de réalisation de l'invention, non représenté sur les figures, les mémoires utilisées pour lire les informations Ri, Vi, Bi (i = 1, 2, 3) sont de type RAM statique. La fréquence d'accès des échantillons n'est alors pas multiplexée et est égale à 40,5 MHz. La fréquence de sortie est égale à 13,5 MHz.

La figure 5 représente une vue de détail d'un deuxième circuit représenté en figure 2. Ce deuxième circuit est le circuit de traitement PT.

Le circuit de traitement PT comprend un circuit T de traitement destiné à effectuer les opérations mentionnées précédemment telles que, par exemple, la compression des blancs ou l'uniformisation des niveaux de noir et, de façon plus générale, toute opération de traitement que doivent subir les informations de couleur Ri, Vi, Bi (i = 1, 2, 3).

Il s'ensuit que le circuit T génère les informations de couleur traitées Ri(T), Vi(T), Bi(T) à partir des informations de couleur initiales Ri, Vi, Bi.

Les informations de couleur traitées Ri(T), Vi(T) et Bi(T) sont converties par les circuits respectifs CVi en informations de luminance et de chrominance Yi, CRi, CBi.

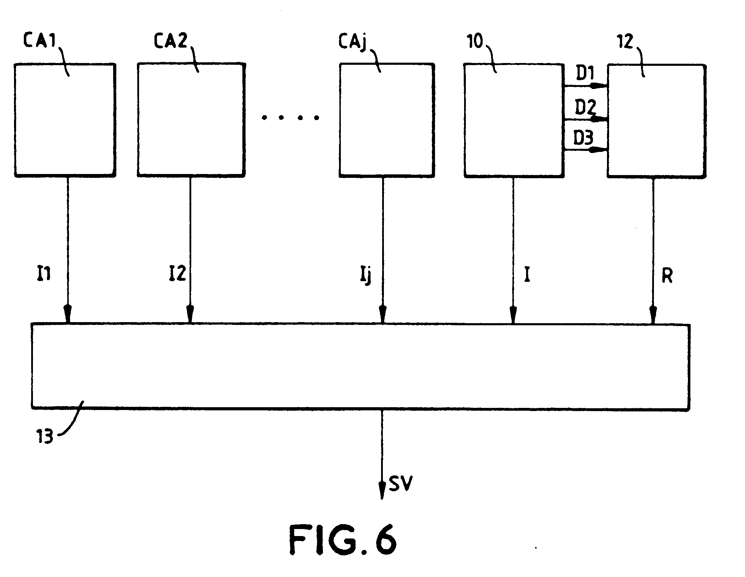

La figure 6 représente une application utilisant une caméra de ralenti selon l'invention. Selon cette application, les signaux l1, l2, ..., lj issus des caméras standard respectives CA1, CA2, ..., CAj ainsi que les signaux I et R issus du dispositif selon l'invention constitué d'une caméra 10 et d'un dispositif 12 sont envoyés dans un mélangeur numérique 13. Par caméra standard, il faut entendre une caméra dont la tête et l'unité de contrôle travaillent à la fréquence trame standard de 50 Hz ou 60 Hz.

Le signal vidéo SV issu du mélangeur 13 représente l'un quelconque des signaux l1, l2, ..., lj, I ou R. Avantageusement, il est alors possible de présenter simultanément ou successivement la scène filmée par la caméra 10 soit à vitesse normale, c'est-à-dire à l'aide du signal I, soit au ralenti, c'est-à-dire à l'aide du signal R.

La description ci-dessus est faite en référence à une image vidéo couleur comprenant les différentes informations de couleur R, V, B. Il est évident pour l'homme de l'art qu'à l'expression "information de couleur" peut être substituée l'expression "information de luminance" dans le cas où l'invention s'applique au traitement d'une image en noir et blanc, et non plus d'une image en couleur.

## Revendications

1. Dispositif (11) de traitement des informations de couleur (R, V, B) d'un signal représentant une image, caractérisé en ce qu'il comprend des moyens constitués, pour chaque information de couleur, d'un convertisseur analogique/numérique (12, 13, 14) et d'une mémoire tampon (MT1, MT2, MT3) associée audit convertisseur analogique/numérique, la sortie de chaque convertisseur analogique/numérique étant reliée à l'entrée de la mémoire tampon qui lui est associée, chaque convertisseur analogique/numérique permettant d'échantillonner le signal qu'il reçoit à une fréquence Fe égale à N fois la fréquence d'échantillonnage standard du signal de luminance, N étant un nombre entier supérieur ou égal à 1, et chaque mémoire tampon permettant d'écrire les échantillons qu'elle reçoit à ladite fréquence Fe et de lire lesdits échantillons à la fréquence standard du signal de luminance, un circuit (PT) de traitement permettant de traiter les informations numériques issues de chaque mémoire tampon, ledit circuit de traitement comprenant des circuits de conversion (CV1, CV2, CV3) permettant de convertir les informations de couleur (R, V, B) en informations de luminance et de chrominance (Y, CR, CB), et des circuits sérialiseurs (SE1, SE2, SE3) recueillant les signaux issus du circuit (PT) de traitement et permettant de générer des signaux (D1, D2, D3) destinés à restituer l'image avec un effet de ralenti.

2. Dispositif (11) selon la revendication 1, caractérisé en ce que chaque mémoire tampon (MT1, MT2, MT3) comprend, en parallèle, un premier sous-ensemble de N mémoires de type FIFO en parallèle (FI1, FI2, FI3) et un deuxième sous-ensemble de N mémoires de type FIFO en parallèle (FP1, FP2, FP3), lesdits premier et deuxième sous-ensembles recevant respectivement les échantillons d'ordre impair et les échantillons d'ordre pair issus du convertisseur analogique/numérique associé à la mémoire tampon, de façon à générer, pour chaque couleur, N échantillons de couleur, en ce que le circuit de traitement (PT) comprend un premier circuit (T) permettant le traitement des 3 X N informations numériques issues des mémoires tampon et N circuits de conversion (CV1, CV2, CV3) permettant de transformer les trois informations de couleur (R, V, B) de chaque échantillon en information de luminance (Y), de différence de couleur bleue (CB) et de différence de couleur rouge (CR), et en ce que les circuits sérialiseurs (SE1, SE2, SE3) sont au nombre de N, chaque circuit sérialiseur recevant sur son entrée les trois composantes de luminance et de différence de couleur d'un même échantillon.

3. Dispositif (11), selon la revendication 1 ou 2, caractérisé en ce qu'il comprend des moyens (MO, SE4) pour générer un signal (I) permettant de restituer l'image à vitesse normale.

4. Dispositif (11) selon la revendication 3, caractérisé en ce que les moyens (MO, SE4) pour générer un signal (I) permettant de restituer l'image à vitesse normale sont constitués d'un circuit (MO) constitué de circuits de retard (t1, t2, ..., tN-1) et de circuits permettant de faire la moyenne de chaque composante de luminance, de différence de couleur rouge et de différence de couleur bleue de façon que les signaux m1, m2, m3 issus dudit circuit (MO) s'écrivent :

$$m1= \frac{Y1\,(t1)+Y2\,(t2)+Y3\,(t3)+...+YN}{N}\,,$$

$$m2= \frac{CR1\,(t1)+CR2\,(t2)+CR3\,(t3)+...+CRN}{N}\,,$$

$$m3= \frac{CB1\,(t1)+CB2\,(t2)+CB3\,(t3)+...+CBN}{N}\,,$$

où ti (i = 1, 2, ..., N-1) est un retard permettant de décaler temporellement les composantes Yi, CRi et CBi sur les composantes respectives YN, CRN, CBN, et d'un sérialiseur (SE4) recevant sur ses entrées les signaux m1, m2, m3 et délivrant sur sa sortie le signal (I) permettant de restituer l'image à vitesse normale.

5. Dispositif (11) selon la revendication 3, caractérisée en ce que les moyens (MO, SE4) pour générer un signal (I) permettant de restituer l'image à vitesse normale sont constitués d'un circuit (MO) constitué de circuits de retards (t1, t2, ..., tN-1) et de circuits permettant de faire la moyenne de chaque composante de luminance, de différence de couleur rouge et de différence de couleur bleue de façon que les signaux m1, m2, m3 issus dudit circuit (MO) s'écrivent :

$$m1= \frac{\alpha1xY1\,(t1)+\alpha2xY2\,(t2)+\alpha3xY3\,(t3)+...\alpha NxYN}{N}\,,$$

$$m2= \frac{\beta1xCR1\,(t1)+\beta2xCR2\,(t2)+\beta3xCR3\,(t3)+...+\beta NxYN}{N}\,,$$

$$m3= \frac{\gamma1xCB1\,(t1)+\gamma2xCB2\,(t2)+\gamma3xCB3\,(t3)+...+\gamma NxYN}{N}\,,$$

où ti (i = 1, 2, ..., N-1) est un retard permettant de décaler temporellement les composantes Yi, CRi, et CBi sur les composantes respectives YN, CRN et CBN et où $\alpha i$, $\beta i$ et $\gamma i$ (i = 1, 2, ..., N) sont des coefficients pondérateurs, et d'un sérialiseur (SE4) recevant sur ses entrées les signaux m1, m2, m3 et délivrant sur sa sortie le signal (I) permettant de restituer l'image à vitesse normale.

6. Caméra vidéo comprenant des moyens permettant de convertir en informations de couleur (R, V, B) l'image lumineuse (L) qu'elle recueille et un dispositif (11) de traitement desdites informations de couleur (R, V, B), caractérisée en ce que le dispositif (11) de traitement est un dispositif selon l'une quelconque des revendications 1 à 5.

7. Système permettant de générer un signal (R) représentant une image de ralenti, caractérisé en ce qu'il comprend une caméra (10) selon la revendication 6 et un dispositif (12) permettant de générer le signal (R) représentant l'image de ralenti à partir des signaux (D1, D2, D3) issus de la caméra (10).

8. Caméra vidéo comprenant des moyens permettant de convertir en informations de couleur (R, V, B) l'image qu'elle recueille et un dispositif (11) de traitement des informations de couleur (R, V, B), caractérisée en ce que le dispositif (11) de traitement comprend des premiers moyens (MT1, MT2, MT3, PT, SE1, SE2, SE3) pour générer des signaux (D1, D2, D3) permettant de constituer l'image avec un effet de ralenti et des seconds moyens (MO, SE4) pour générer un signal (I) permettant de constituer la même image à vitesse normale.

FIG.1a

FIG.1b

FIG.2

EP 0 781 056 A1

FIG.3

MT

FP1 (POINTS PAIRS) →S1

FP2 (POINTS PAIRS) →S2

FP3 (POINTS PAIRS) →S3

E

FI1 (POINTS IMPAIRS)

FI2 (POINTS IMPAIRS)

FI3 (POINTS IMPAIRS)

# FIG.4

FIG. 5

FIG.6

# EP 0 781 056 A1

| | Office européen | RAPPORT DE RECHERCHE EUROPEENNE | Numero de la demande |
|---|---|---|---|
| | des brevets | | EP 96 40 2781 |

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | US 4 677 464 A (YAMAJI KAZUNORI ET AL) 30 Juin 1987<br>* colonne 3, ligne 60 - colonne 7, ligne 29 *<br>--- | 1-8 | H04N9/64 |
| A | EP 0 420 612 A (SONY CORP) 3 Avril 1991<br>* colonne 11, ligne 44 - colonne 15, ligne 1 *<br>--- | 1 | |
| A | US 4 785 358 A (NINOMIYA TAKESHI) 15 Novembre 1988<br>* colonne 11, ligne 55 - colonne 14, ligne 1 *<br>* figure 4 *<br>--- | 1,2,6-8 | |
| A | EP 0 459 615 A (PIONEER ELECTRONIC CORP) 4 Décembre 1991<br>* colonne 3, ligne 8 - colonne 6, ligne 42 *<br>--- | 1,2,6-8 | |
| A | PATENT ABSTRACTS OF JAPAN<br>vol. 009, no. 122 (P-359), 28 Mai 1985<br>& JP 60 007648 A (SONY KK), 16 Janvier 1985,<br>* abrégé *<br>--- | 1,6-8 | **DOMAINES TECHNIQUES RECHERCHES (Int.Cl.6)**<br><br>H04N |
| A | PATENT ABSTRACTS OF JAPAN<br>vol. 018, no. 416 (E-1588), 4 Août 1994<br>& JP 06 125526 A (HOEI:KK), 6 Mai 1994,<br>* abrégé *<br>--- | 1,6-8 | |
| | -/-- | | |

Le présent rapport a été établi pour toutes les revendications

| Lieu de la recherche | Date d'achèvement de la recherche | Examinateur |
|---|---|---|
| LA HAYE | 8 Avril 1997 | Wentzel, J |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

 

& : membre de la même famille, document correspondant

EPO FORM 1503 03.82 (P04C02)

14

EP 0 781 056 A1

**Office européen des brevets**

# RAPPORT DE RECHERCHE EUROPEENNE

Numero de la demande

EP 96 40 2781

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | SMPTE JOURNAL, vol. 94, no. 9, Septembre 1985, SCARSDALE, N.Y.; US , pages 896-903, XP002028931 L. J. THORPE ET AL.: "Super Motion System" | 1 | |
| X | * page 898, colonne du milieu, ligne 17 - colonne de droite, ligne 6 * * page 900, colonne de gauche, ligne 26 - page 901, colonne de gauche, ligne 38 * * figures 6,7 *  ----- | 8 | |
| | | | **DOMAINES TECHNIQUES RECHERCHES (Int.Cl.6)** |

Le présent rapport a été établi pour toutes les revendications

| Lieu de la recherche | Date d'achèvement de la recherche | Examinateur |
|---|---|---|
| LA HAYE | 8 Avril 1997 | Wentzel, J |

15

**CATEGORIE DES DOCUMENTS CITES**

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)